# EUROPEAN PATENT APPLICATION

(11) **EP 4 053 689 A1**
(43) Date of publication of application: **07.09.2022**
(21) Application number: 20892405.0
(22) Date of filing: 10.11.2020
(51) Int. Cl.: G06F 3/0481

(54) **SCREEN DISPLAY METHOD AND ELECTRONIC DEVICE**

(30) Priority: 29.11.2019 CN 201911206654
(71) Applicant: Huawei Technologies Co., Ltd., Shenzhen, Guangdong 518129 (CN)
(72) Inventor: BI, Sheng, Shenzhen, Guangdong 518129 (CN)
(74) Representative: MERH-IP Matias Erny Reichl Hoffmann Patentanwälte PartG mbB
(86) International application number: PCT/CN2020/127669
(87) International publication number: WO 2021/104000

(57) **Abstract**

A screen display method and an electronic device are provided. The method includes: receiving a multi-window instruction (S101); in response to the multi-window instruction, displaying a first window and a second window, and displaying a first prompt and a status indication of the first prompt in the first window, and a second prompt and a status indication of the second prompt in the second window, where an interface of a first application is displayed in the first window, an interface of a second application is displayed in the second window, the first prompt and the second prompt are in an active state or an inactive state, a window with a prompt in the active state is a main window, a window with a prompt in the inactive state is a secondary window, and the status indication of the first prompt and the status indication of the second prompt are determined according to a preset rule (S102); and storing an application displayed in the main window, where the application displayed in the main window is the first application or the second application (S103). In this way, a resource that can be used by only one application process at a time can be fixedly allocated to an application displayed in one window in multi-window display.

## Description

This application claims priority to Chinese Patent Application No. 201911206654.9, filed with the China National Intellectual Property Administration on November 29, 2019 and entitled "SCREEN DISPLAY METHOD AND ELECTRONIC DEVICE", which is incorporated herein by reference in its entirety.

### TECHNICAL FIELD

This application relates to the field of communication technologies, and in particular, to a screen display method and an electronic device.

### BACKGROUND

Currently, with improvement of screen display technologies of electronic devices, screen display of the electronic device also presents diversity. For example, on a basis of existing full-screen display, a new display mode such as split-screen display or picture-in-picture display is added. These new display modes all require that a plurality of running applications can be simultaneously displayed on a screen, and this means that one screen is divided into a plurality of resources for displaying of an application. Therefore, a plurality of applications may simultaneously interact with a user in the foreground.

In a scenario in which a plurality of running applications are simultaneously displayed on a screen, how to allocate a resource (for example, use permission of a critical resource such as an audio resource or a printer) that can be used by only one application process at a time is an urgent problem that needs to be resolved.

### SUMMARY

This application provides a screen display method and an electronic device, so that a resource that can be used by only one application process at a time can be fixedly allocated to an application displayed in one window in multi-window display. This prevents applications in a plurality of screen windows from contending for a resource, and improves user experience.

According to a first aspect, this application provides a screen display method. The method is performed by an electronic device that has a touchscreen, and the method includes:
receiving a multi-window instruction; in response to the multi-window instruction, displaying a first window and a second window, and displaying a first prompt and a status indication of the first prompt in the first window, and a second prompt and a status indication of the second prompt in the second window, where an interface of a first application is displayed in the first window, an interface of a second application is displayed in the second window, the first prompt and the second prompt are in an active state or an inactive state, a window with a prompt in the active state is a main window, and a window with a prompt in the inactive state is a secondary window, and the status indication of the first prompt and the status indication of the second prompt are determined according to a preset rule; and storing an application displayed in the main window, where the application displayed in the main window is the first application or the second application.

According to the screen display method provided in the first aspect, a main window and a secondary window are distinguished in multi-window display, and the electronic device knows an application displayed in the main window and an application displayed in the secondary window, so that a resource that can be used by only one application process at a time may be fixedly allocated to an application displayed in one window in the multi-window display. This prevents applications in a plurality of screen windows from contending for a resource, and improves user experience. In addition, an application actively displayed from the background may be displayed in the main window or the secondary window, and multi-window (for example, split screen) does not exit, so that a user continues to use the multi-window, and user experience is therefore improved.

In a possible design, the method further includes:
receiving an operation on the first prompt or the second prompt; and
in response to the operation on the first prompt or the second prompt, changing a state of the first prompt or the second prompt.

According to the screen display method provided in this implementation, the user may operate a prompt (for example, clicking the prompt) of a window, to change a state of the prompt, and switch the window to a main window or a secondary window.

In a possible design, the method further includes:
when the operation on the first prompt is not received within a preset time period, skipping displaying the first prompt; and
when the operation on the second prompt is not received within a preset time period, skipping displaying the second prompt.

According to the screen display method provided in this implementation, a prompt automatically disappears after a preset time period, to avoid affecting normal use of the user.

In a possible design, the method further includes:
receiving an operation on the touchscreen; and
in response to the operation on the touchscreen, redisplaying the first prompt in the first interface and the second prompt in the second interface.

In a possible design, the preset rule is:
determining a sequence of opening the first application and the second application; and determining a window corresponding to a first opened application as a main window, and a window corresponding to a later opened application as a secondary window; or
determining a window corresponding to a later opened application as a main window, and a window corresponding to a first opened application as a secondary window.

In a possible design, the method further includes:
receiving an application of a third application for obtaining critical resource use permission, wherein the third application is the first application or the second application; and
if the third application is the stored application displayed in the main window, allocating the critical resource use permission to the third application.

According to the screen display method provided in this implementation, the critical resource use permission is allocated to the application displayed in the main window. This can prevent applications in a plurality of screen windows from contending for a resource, and improve user experience.

In a possible design, the method further includes:
receiving an instruction input by a user to the electronic device; and
performing corresponding processing on the main window based on the instruction input by the user to the electronic device.

In a possible design, the instruction input by the user to the electronic device includes an instruction for operating the electronic device by the user and a voice input instruction.

The screen display method provided in this implementation can prevent an instruction for operating the electronic device by the user from being switched back and forth between different split screen windows in a split screen scenario.

In a possible design, the method further includes:
receiving an instruction for displaying a fourth application sent from the background; and
displaying the fourth application in the main window.

According to the screen display method provided in this implementation, an application actively displayed from the background may be displayed in the main window, and multi-window (for example, split screen) does not exit, so that the user continues to use the multi-window, and user experience is therefore improved.

In a possible design, the method further includes:
receiving an instruction for ending the fourth application; and
redisplaying, in the main window, the application displayed in the main window.

According to a second aspect, this application provides an electronic device, including a processor, a memory, and a touchscreen. The memory and the touchscreen are coupled to the processor, the memory is configured to store computer program code, and the computer program code includes computer instructions. When the processor reads the computer instructions from the memory, the electronic device is enabled to perform the following operations:
receiving a multi-window instruction; in response to the multi-window instruction, displaying a first window and a second window, and displaying a first prompt and a status indication of the first prompt in the first window, and a second prompt and a status indication of the second prompt in the second window, where an interface of a first application is displayed in the first window, an interface of a second application is displayed in the second window, the first prompt and the second prompt are in an active state or an inactive state, a window with a prompt in the active state is a main window, a window with a prompt in the inactive state is a secondary window, and the status indication of the first prompt and the status indication of the second prompt are determined according to a preset rule; and recording an application displayed in the main window, where the application displayed in the main window is the first application or the second application.

In a possible design, the processor is further configured to:
receive an operation on the first prompt or the second prompt; and
in response to the operation on the first prompt or the second prompt, change a state of the first prompt or the second prompt.

In a possible design, the processor is further configured to:
when the operation on the first prompt is not received within a preset time period, skip displaying the first prompt; and
when the operation on the second prompt is not received within a preset time period, skip displaying the second prompt.

In a possible design, the processor is further configured to:
receive an operation on the touchscreen;
in response to the operation on the touchscreen, redisplay the first prompt in the first interface and the second prompt in the second interface.

In a possible design, the preset rule is:
determining a sequence of opening the first application and the second application; and determining a window corresponding to a first opened application as a main window, and a window corresponding to a later opened application as a secondary window; or
determining a window corresponding to a later opened application as a main window, and a window corresponding to a first opened application as a secondary window.

In a possible design, the processor is further configured to:
receive an application of a third application for obtaining critical resource use permission, where the third application is the first application or the second application; and
if the third application is the stored application displayed in the main window, allocate the critical resource use permission to the third application.

In a possible design, the processor is further configured to:
receive an instruction input by a user to the electronic device; and
perform corresponding processing on the main window based on the instruction input by the user to the electronic device.

In a possible design, the instruction input by the user to the electronic device includes an instruction for operating the electronic device by the user and a voice input instruction.

In a possible design, the processor is further configured to:
receive an instruction for displaying a fourth application sent from the background; and
display the fourth application in the main window.

In a possible design, the processor is further configured to:
receive an instruction for ending the fourth application; and
redisplay, in the main window, the application displayed in the main window.

For beneficial effects of the electronic device provided in the second aspect and the possible designs of the second aspect, refer to the beneficial effects brought by the first aspect and the possible implementations of the first aspect. Details are not described herein again.

According to a third aspect, this application provides a readable storage medium, and the readable storage medium stores executable instructions. When at least one processor of an electronic device executes the executable instructions, the electronic device performs the screen display method in any one of the first aspect or the possible designs of the first aspect.

### BRIEF DESCRIPTION OF DRAWINGS

FIG. 1 is a schematic diagram of a structure of an electronic device applicable in this application;
FIG. 2 is a schematic diagram of a software structure of an embodiment of an electronic device according to this application;
FIG. 3 is a flowchart of an embodiment of a screen display method according to this application;
FIG. 4 is a schematic diagram of screen display according to this application; and
FIG. 5 is a flowchart of an embodiment of a screen display method according to this application.

### DESCRIPTION OF EMBODIMENTS

In embodiments of this application, words such as "example" or "for example" are used to indicate examples, instances, or description. Any embodiment or solution described as "example" or "for example" in embodiments of this application is not to be construed as being more preferred or having more advantages than another embodiment or solution. Exactly, use of the word "example", "for example", or the like is intended to present a related concept in a specific manner. Terms "first" and "second" are merely used for a purpose of description, and shall not be understood as an indication or implication of relative importance.

For example, an electronic device in this application may be a mobile phone, a tablet computer, a personal computer (personal computer, PC), a personal digital assistant (personal digital assistant, PDA), a smartwatch, a netbook, a wearable electronic device, an augmented reality (augmented reality, AR) device, a virtual reality (virtual reality, VR) device, a vehicle-mounted device, a smart automobile, a smart speaker, or a robot. This application imposes no special limitation on a specific form of the electronic device.

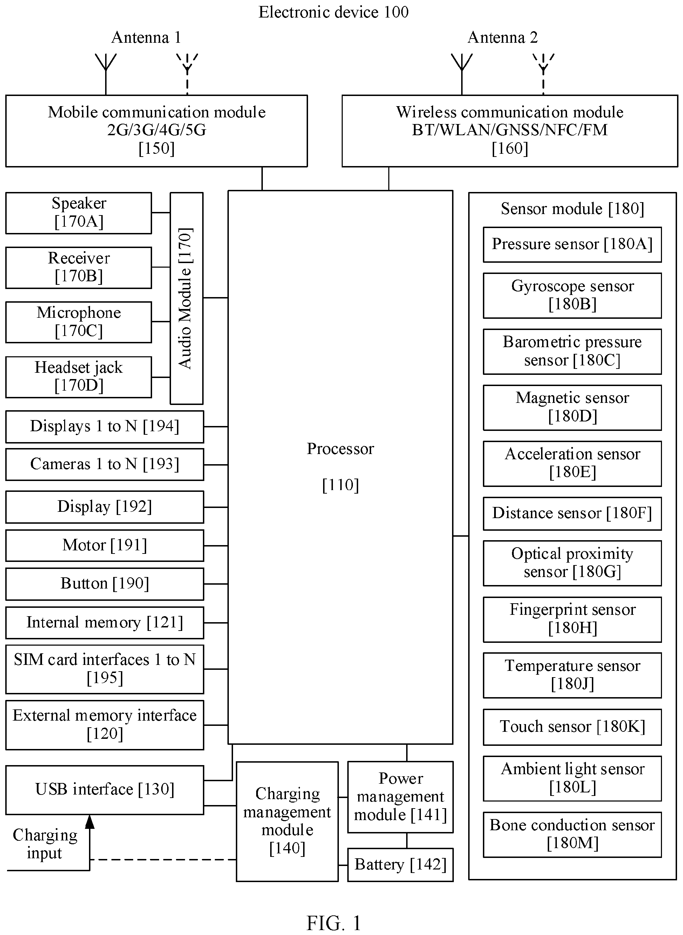

FIG. 1 is a schematic diagram of a structure of an electronic device applicable in this application. As shown in FIG. 1, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor 180, a button 190, a motor 191, an indicator 192, a camera 193, a display 194, a subscriber identification module (subscriber identification module, SIM) card interface 195, and the like. It may be understood that the structure shown in embodiments does not constitute a specific limitation on the electronic device 100. In some other embodiments of this application, the electronic device 100 may include more or fewer components than the components shown in the figure, some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors. In some embodiments, the electronic device 100 may alternatively include one or more processors 110. The controller may be a nerve center and a command center of the electronic device 100. The controller may generate an operation control signal based on an instruction operation code and a time sequence signal, to control instruction reading and instruction execution. A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access and reduces a waiting time of the processor 110, so that system efficiency of the electronic device 100 is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identification module, SIM) interface, a universal serial bus (universal serial bus, USB) interface, and/or the like. The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset, to play audio through the headset.

It may be understood that an interface connection relationship between modules illustrated in embodiments of this application is merely an example for description, and does not constitute a limitation on the structure of the electronic device 100. In some other embodiments of this application, the electronic device 100 may alternatively use an interface connection manner different from that in the foregoing embodiment, or a combination of a plurality of interface connection manners.

The charging management module 140 is configured to receive a charging input from the charger. The charger may be a wireless charger or a wired charger. In some embodiments of wired charging, the charging management module 140 may receive a charging input from a wired charger through the USB interface 130. In some embodiments of wireless charging, the charging management module 140 may receive a wireless charging input through a wireless charging coil of the electronic device 100. The charging management module 140 may further supply power to the electronic device 100 through the power management module 141 while charging the battery 142.

The power management module 141 is configured to connect the battery 142 and the charging management module 140 to the processor 110. The power management module 141 receives an input from the battery 142 and/or the charging management module 140, and supplies power to the processor 110, the internal memory 121, the display 194, the camera 193, the wireless communications module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented through the antenna 1, the antenna 2, the mobile communications module 150, the wireless communications module 160, the modem processor, the baseband processor, and the like. The antenna 1 and the antenna 2 are configured to: transmit and receive electromagnetic wave signals. Each antenna in the electronic device 100 may be configured to cover one or more communication bands. Different antennas may be further multiplexed, to improve antenna utilization. For example, the antenna 1 may be multiplexed as a diversity antenna in a wireless local area network. In some other embodiments, an antenna may be used in combination with a tuning switch.

The mobile communications module 150 may provide a wireless communication solution that includes 2G/3G/4G/5G or the like and that is applied to the electronic device 100. The mobile communications module 150 may include at least one filter, a switch, a power amplifier, a low noise amplifier, and the like. The mobile communications module 150 may receive an electromagnetic wave through the antenna 1, perform processing such as filtering and amplification on the received electromagnetic wave, and transmit a processed electromagnetic wave to the modem processor for demodulation. The mobile communications module 150 may further amplify a signal modulated by the modem processor, and convert the signal into an electromagnetic wave for radiation through the antenna 1. In some embodiments, at least some functional modules of the mobile communications module 150 may be disposed in the processor 110. In some embodiments, at least some functional modules of the mobile communications module 150 and at least some modules of the processor 110 may be disposed in a same component.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The baseband processor processes the low-frequency baseband signal, and then transmits a processed signal to the application processor. The application processor outputs a sound signal by using an audio device (which is not limited to the speaker 170A, the receiver 170B, or the like), or displays an image or a video by using the display 194. In some embodiments, the modem processor may be an independent component. In some other embodiments, the modem processor may be independent of the processor 110, and is disposed in a same component as the mobile communications module 150 or another functional module.

The wireless communications module 160 may provide a wireless communication solution that includes a wireless local area network (wireless local area network, WLAN), Bluetooth, a global navigation satellite system (global navigation satellite system, GNSS), frequency modulation (frequency modulation, FM), NFC, an infrared (infrared, IR) technology, or the like and that is applied to the electronic device 100. The wireless communications module 160 may be one or more components integrating at least one communications processor module. The wireless communications module 160 receives an electromagnetic wave through the antenna 2, performs frequency modulation and filtering processing on the electromagnetic wave signal, and sends a processed signal to the processor 110. The wireless communications module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communications module 150 are coupled, and the antenna 2 and the wireless communications module 160 are coupled, so that the electronic device 100 can communicate with a network and another device by using a wireless communications technology. The wireless communications technology may include a GSM, a GPRS, CDMA, WCDMA, TD-SCDMA, LTE, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function by using the GPU, the display 194, the application processor, and the like. The GPU is a microprocessor for image processing, and is connected to the display 194 and the application processor. The GPU is configured to perform mathematical and geometric calculation, and render an image. The processor 110 may include one or more GPUs, which execute instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function through the ISP, one or more cameras 193, the video codec, the GPU, one or more displays 194, the application processor, and the like.

The NPU is a neural-network (neural-network, NN) computing processor. The NPU quickly processes input information with reference to a structure of a biological neural network, for example, a transfer mode between human brain neurons, and may further continuously perform self-learning. Applications such as intelligent cognition of the electronic device 100, for example, image recognition, facial recognition, speech recognition, and text understanding, may be implemented through the NPU.

The external memory interface 120 may be used to connect to an external storage card, for example, a micro SD card, to extend a storage capability of the electronic device 100. The external memory card communicates with the processor 110 through the external memory interface 120, to implement a data storage function. For example, data files such as music, photos, and videos are stored in the external storage card.

The internal memory 121 may be configured to store one or more computer programs, and the one or more computer programs include instructions. The processor 110 may run the instructions stored in the internal memory 121, to enable the electronic device 100 to perform a voice switch method, various function applications, data processing, and the like that are provided in some embodiments of this application. The internal memory 121 may include a program storage area and a data storage area. The program storage area may store an operating system. The program storage area may further store one or more applications (such as Gallery and Contacts), and the like. The data storage area may store data (such as photos and contacts) created during the use of the electronic device 100, and the like. In addition, the internal memory 121 may include a high-speed random access memory, or may include a nonvolatile memory, for example, at least one magnetic disk storage device, a flash memory device, or a universal flash storage (universal flash storage, UFS). In some embodiments, the processor 110 may run the instructions stored in the internal memory 121 and/or instructions stored in the memory disposed in the processor 110, to enable the electronic device 100 to perform the voice switch method, various function applications, and data processing that are provided in embodiments of this application.

The electronic device 100 may implement an audio function such as music playing and recording through the audio module 170, the speaker 170A, the receiver 170B, the microphone 170C, the headset jack 170D, the application processor, and the like. The audio module 170 is configured to convert digital audio information into analog audio signal output, and is also configured to convert an analog audio input into a digital audio signal. The audio module 170 may be further configured to: code and decode an audio signal. In some embodiments, the audio module 170 may be disposed in the processor 110, or some functional modules in the audio module 170 are disposed in the processor 110. The speaker 170A, also referred to as a "horn", is configured to convert an audio electrical signal into a sound signal. The electronic device 100 may listen to music or answer a hands-free call by using the speaker 170A. The receiver 170B, also referred to as an "earpiece", is configured to convert an audio electrical signal into a sound signal. When a call is answered or audio information is listened to by using the electronic device 100, the receiver 170B may be put close to a human ear to listen to a voice. The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, identify a sound source, implement a directional recording function, and the like. The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The sensor 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The pressure sensor 180A is configured to sense a pressure signal, and can convert the pressure signal into an electrical signal. In some embodiments, the pressure sensor 180A may be disposed on the display 194. There are many types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on a capacitance change. When a touch operation is performed on the display 194, the electronic device 100 detects intensity of the touch operation by using the pressure sensor 180A. The electronic device 100 may also calculate a touch location based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on a Messages icon, an instruction for viewing an SMS message is executed. When a touch operation whose touch operation intensity is greater than or equal to the first pressure threshold is performed on the Messages icon, an instruction for creating a new SMS message is executed.

The gyroscope sensor 180B may be configured to determine a motion posture of the electronic device 100. In some embodiments, an angular velocity of the electronic device 100 around three axes (that is, axes x, y, and z) may be determined by using the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may be used in a navigation scenario, a motion-sensing game scenario, and the like.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between landscape mode and portrait mode, or a pedometer.

The distance sensor 180F is configured to measure a distance. The electronic device 100 may measure a distance in an infrared manner or a laser manner. In some embodiments, in a photographing scenario, the electronic device 100 may measure a distance by using the distance sensor 180F, to implement quick focusing.

The optical proximity sensor 180G may include, for example, a light-emitting diode (LED) and an optical detector such as a photodiode. The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, the electronic device 100 may determine that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a leather case mode or a pocket mode to automatically unlock or lock the screen.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H (also referred to as a fingerprint recognizer) is configured to collect a fingerprint. The electronic device 100 may use a feature of the collected fingerprint to implement fingerprint-based unlocking, application lock access, fingerprint-based photographing, fingerprint-based call answering, and the like.

The touch sensor 180K may also be referred to as a touch panel or a touch-sensitive surface. The touch sensor 180K may be disposed on the display 194, and the touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor, to determine a type of a touch event. A visual output related to the touch operation may be provided on the display 194. In some other embodiments, the touch sensor 180K may alternatively be disposed on a surface of the electronic device 100 at a location different from a location of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse, and receive a blood pressure beating signal. In some embodiments, the bone conduction sensor 180M may alternatively be disposed in the headset, to constitute a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a key signal input related to a user setting and function control of the electronic device 100.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 can support a nano-SIM card, a micro-SIM card, a SIM card, and the like. A plurality of cards may be simultaneously inserted into a same SIM card interface 195. The plurality of cards may be of a same type or of different types. The SIM card interface 195 is compatible with different types of SIM cards. The SIM card interface 195 is also compatible to an external storage card. The electronic device 100 interacts with a network through the SIM card, to implement functions such as calling and data communication. In some embodiments, the electronic device 100 uses an eSIM, that is, an embedded SIM card. The eSIM card may be embedded into the electronic device 100, and cannot be separated from the electronic device 100.

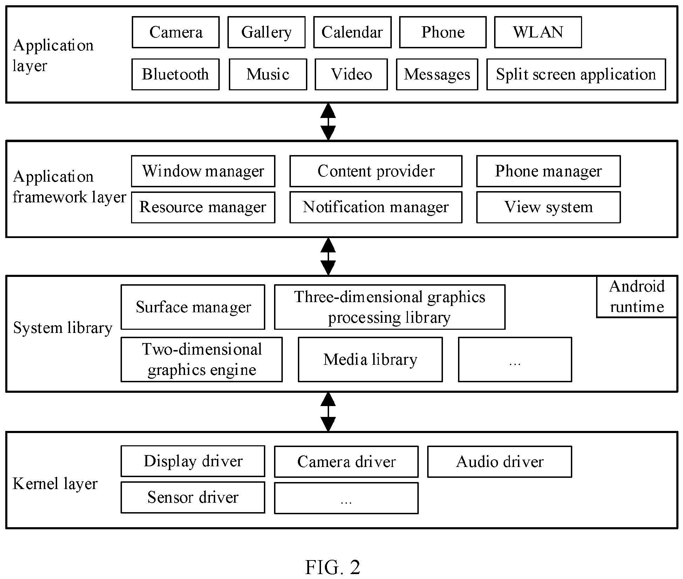

FIG. 2 is a schematic diagram of a software structure of an embodiment of an electronic device according to this application. In embodiments, an Android (Android) system is divided into four layers from top to bottom: an application layer, an application framework layer, a system library, and a kernel layer.

The application layer may include a series of application packages. As shown in FIG. 1, the application packages may include applications such as Camera, Gallery, Calendar, Phone, WLAN, Bluetooth, Music, Video, and Messages.

In some embodiments of this application, the application packages further include a split screen application. The split screen application may provide an interface for interaction between the electronic device 100 and the user.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like. The window manager is configured to manage a window program. The window manager may obtain a size of a display, determine whether there is a status bar, lock a screen, take a screenshot, and the like.

In some embodiments of this application, the window manager may be specifically a window manager service (Window Manager Service, WMS). The WMS stores information about each application window displayed on a current screen, for example, a quantity of application windows displayed on the current screen. The split screen application may specifically determine a size and a location of each window based on the quantity of application windows displayed on the current screen.

The content provider is configured to: store and obtain data, and enable the data to be accessed by an application. The data may include a video, an image, audio, calls that are made and received, a browsing history and a bookmark, an address book, and the like.

The view system includes visual controls, such as a control for displaying a text and a control for displaying a picture. The view system may be configured to construct an application. A display interface may include one or more views. For example, a display interface including an SMS message notification icon may include a text display view and an image display view.

The phone manager is configured to provide a communication function of the electronic device 100, for example, management of a call status (including answering, declining, or the like).

The resource manager provides various resources such as a localized character string, an icon, a picture, a layout file, and a video file for an application.

The notification manager enables an application to display notification information in a status bar, and may be configured to convey a notification type message. The displayed notification information may automatically disappear after a short pause without user interaction. For example, the notification manager is configured to notify download completion, provide a message notification, and the like. The notification manager may alternatively be a notification that appears in a top status bar of the system in a form of a graph or a scroll bar text, for example, a notification of an application running in the background or a notification that appears on a screen in a form of a dialog window. For example, text information is displayed in the status bar, an announcement is given, the electronic device vibrates, or an indicator light blinks.

The Android runtime (Android Runtime) includes a kernel library and a virtual machine. The Android runtime is responsible for scheduling and management of the Android system.

The core library includes two parts: a function that needs to be invoked in Java language and a core library of Android.

The application layer and the application framework layer run on the virtual machine. The virtual machine executes Java files at the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (MediaLibraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats, for example, MPEG-4, H.264, MP3, AAC, AMR, JPG, PNG, and the like.

The three-dimensional graphics processing library is configured to implement three-dimensional graphics drawing, image rendering, composition, layer processing, and the like. The 2D graphics engine is a drawing engine for 2D drawing.

The kernel layer is a layer between hardware and software. The kernel layer includes at least a display driver, a camera driver, an audio driver, and a sensor driver.

All technical solutions in the following embodiments may be implemented on the electronic device 100 that has the foregoing hardware architecture and software architecture.

In a related technology, in a scenario in which a plurality of running applications are simultaneously displayed on a screen, how to allocate a resource (for example, use permission of a critical resource such as an audio resource or a printer) that can be used by only one application process at a time is described below. Specifically, use permission of a critical resource such as an audio resource is assigned by default to an application that is last started, and a previous application releases the resource. Applications are queued for permission of a critical resource such as a printer. That is, after an application finishes using the resource, a next application uses the resource. The foregoing method is confusing, sometimes interrupts use by a user, and brings poor user experience. For an application actively displayed from the background, for example, in an incoming call (including an incoming voice call and an incoming video call) scenario, a split screen scenario is automatically exited in a related technology. If the user still wants to use split screen after the call ends, a plurality of applications in the split screen need to be sequentially re-opened, resulting in poor user experience. To resolve the foregoing problem, this application provides a screen display method and an electronic device. When a plurality of running applications are simultaneously displayed in a plurality of windows, prompts for distinguishing between a main window and a secondary window are displayed, and the prompts may be used by a user to set the main window and the secondary window. Therefore, a resource that can be used by only one application process at a time can be allocated to an application displayed in the main window. This prevents applications in a plurality of screen windows from contending for a resource, and improves user experience. An application actively displayed from the background may be displayed in the main window or the secondary window, and multi-window (for example, split screen) does not exit, so that the user continues to use the multi-window, and user experience is therefore improved. The following describes in detail a screen display method and an electronic device that are provided in this application with reference to the accompanying drawings.

First, the term "critical resource" in embodiments of this application is first described. There are many processes in a multiprogramming system, and the processes share various resources. However, many resources can be used by only one process at a time. A resource that can be used by only one application process at a time is referred to as a critical resource, for example, an audio resource. Many physical devices are critical resources, such as an input machine, a printer, and a tape drive.

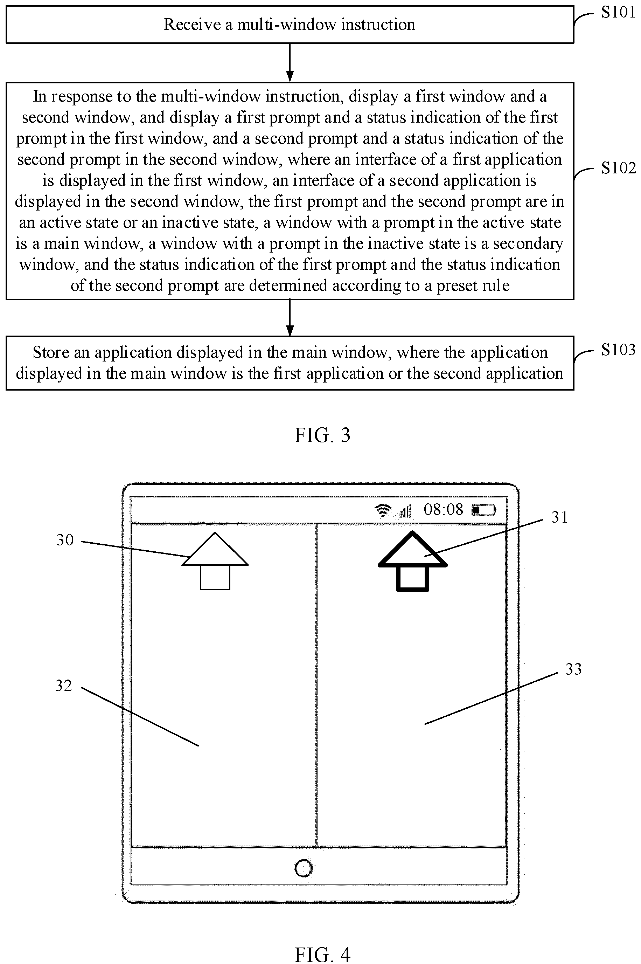

FIG. 3 is a flowchart of an embodiment of a screen display method according to this application. As shown in FIG. 3, the method in this embodiment is performed by an electronic device that has a touchscreen. After receiving a multi-window instruction, the electronic device may display two windows on a screen, or may display more than two windows. In this embodiment, displaying two windows is used as an example, and the method in this embodiment may include the following steps.

S101: Receive the multi-window instruction.

Specifically, the multi-window instruction in this embodiment of this application means that after receiving the multi-window instruction, the electronic device may display two or more windows on the screen. Multi-window is not necessarily complete division of the entire screen. The multi-window instruction may also be a split screen instruction, and split screen is division of the entire screen.

For example, the multi-window instruction (for example, two fingers slide up from the bottom of the screen) may be input by a user in a display interface of an application, and the electronic device displays two windows in response to the multi-window instruction. Alternatively, the multi-window instruction may be input by the user on a home screen of the electronic device, and the electronic device displays two windows in response to the multi-window instruction.

S102: In response to the multi-window instruction, display a first window and a second window, and display a first prompt and a status indication of the first prompt in the first window, and a second prompt and a status indication of the second prompt in the second window. An interface of a first application is displayed in the first window, and an interface of a second application is displayed in the second window. The first prompt and the second prompt are in an active state or an inactive state. A window with a prompt in the active state is a main window, and a window with a prompt in the inactive state is a secondary window. The status indication of the first prompt and the second prompt are determined according to a preset rule.

Specifically, the electronic device displays two windows in response to the multi-window instruction. FIG. 4 is a schematic diagram of screen display according to this application. As shown in FIG. 4, the electronic device displays a first window 32 on the left, and a second window 33 on the right. Alternatively, the electronic device may perform vertical split screen display. A first prompt 30 and a status indication of the first prompt are displayed in the first window 32, and a second prompt 31 and a status indication of the second prompt are displayed in the second window 33. The first prompt 30 and the second prompt 31 are same icons, and the status indications of the first prompt 30 and the second prompt 31 may be indicated by the icons in different colors. For example, a status indication corresponding to the active state is red, and a status indication corresponding to the inactive state is black. Alternatively, the status indications may vary significantly by line thicknesses of icons shown in FIG. 4. The first window displays an interface of the first application, and the second window displays an interface of the second application. For example, the first window displays an interface of WeChat, and the second window displays an interface of a shopping application. Based on the status indications of the prompts, the user can distinguish between an interface of the main window and an interface of the secondary window. It should be noted that a position of the first prompt or the second prompt in a corresponding window is not limited.

The status indication of the first prompt and the status indication of the second prompt are determined according to the preset rule. For example, the preset rule in split screen may be as follows: In horizontal split screen mode, a left window is initially set as a main window and a right window initially is set as a secondary window. In vertical split screen mode, an upper window is initially set as a main window and a lower window is initially set as a secondary window.

In a possible implementation, the preset rule may alternatively be: determining a sequence of opening the first application and the second application; and determining a window corresponding to a first opened application as a main window, and a window corresponding to a later opened application as a secondary window; or
determining a window corresponding to a later opened application as a main window, and a window corresponding to a first opened application as a secondary window.

To be specific, a split screen scenario in multi-window display is used as an example. For example, in a scenario in which split screen is performed for the first time, a window corresponding to a first opened application is determined as a main window, and a window corresponding to a later opened application is determined as a secondary window. When split screen is not performed for the first time, an application that is opened most recently is determined as a main window, and another window is determined as a secondary window.

In a possible implementation, the user may operate a prompt (for example, clicking the prompt) of a window, to change a state of the prompt, and switch the window to a main window or a secondary window. In this case, the method in this embodiment may further include the following steps:
S104: Receive an operation on the first prompt or the second prompt.
S105: In response to the operation on the first prompt or the second prompt, change a state of the first prompt or the second prompt.

Further, when the operation on the first prompt is not received within a preset time period, the first prompt is not displayed. When the operation on the second prompt is not received within a preset time period, the second prompt is not displayed. For example, the preset time period is 5s, and the prompts automatically disappear after the preset time period, to avoid affecting normal use by the user.

Further, after the prompts disappear, if the user needs to readjust the main and secondary windows, the prompts automatically pop up. In this case, the method in this embodiment may further include the following steps:
S106: Receive an operation on the touchscreen.
S107: In response to the operation on the touchscreen, redisplay the first prompt in the first interface and the second prompt in the second interface.

For example, when the user adjusts a size of the first window or the second window, to be specific, a division line of the screen, the prompts on the two interfaces automatically pop up simultaneously.

It should be noted that the first prompt in the first interface and the second prompt in the second interface disappear or are displayed simultaneously.

S103: Store an application displayed in the main window. The application displayed in the main window is the first application or the second application.

Specifically, after the user determines the main and secondary windows, a window manager in the electronic device may store the application displayed in the main window, so that the electronic device knows the application displayed in the main window and an application displayed in the secondary window. A resource that can be used by only one application process at a time may be fixedly allocated to an application displayed in one window in the multi-window display, and the window may be a main window or a secondary window. This prevents applications in a plurality of screen windows from contending for a resource, and improves user experience. In addition, an application actively displayed from the background (for example, a voice call in a call application, or a video call or a voice call in a communication application) may be displayed in the main window or the secondary window, and multi-window (for example, split screen) does not exit, so that the user continues to use the multi-window, and user experience is therefore improved. In this case, the method in this embodiment may further include the following three implementable methods.

Method 1: Receive an application of a third application for obtaining a critical resource use permission, where the third application is the first application or the second application; and if the third application is the stored application displayed in the main window, allocate the critical resource use permission to the third application.

To be specific, the critical resource use permission is allocated to the application displayed in the main window. This can prevent applications in a plurality of screen windows from contending for a resource. For example, the critical resource is an audio resource. In the main and secondary windows, once the main window obtains the audio resource, the secondary window cannot obtain the audio resource. That is, once the user plays music in the main window by using a music app, no matter whether the user watches a video or plays a game in the secondary window, the application in the secondary window does not occupy the audio resource. This prevents applications in a plurality of screen windows from contending. The user can joyfully listen to music in the main window while watching a video in the secondary window based on subtitles.

Method 2: Receive an instruction input by the user to the electronic device, and perform corresponding processing on the main window based on the instruction input by the user to the electronic device.

In this case, the instruction input by the user to the electronic device includes an instruction for operating the electronic device by the user and a voice input instruction.

Specifically, after split screen display, the user operates the electronic device, for example, operates a navigation button, an external keyboard, a Bluetooth keyboard, or a volume button of the mobile phone, or inputs voice. These are all instructions input by the user to the electronic device. After an instruction input by the user to the electronic device is received, the electronic device distributes the instruction to the main window, and performs corresponding processing on the main window based on the instruction. The secondary window can receive only a touch screen instruction, and perform corresponding processing based on the touch screen instruction.

This method in this implementation can prevent an instruction for operating the electronic device by the user from being switched back and forth between different split screen windows in a split screen scenario.

Method 3: Receive an instruction for displaying a fourth application sent from the background, and display the fourth application in the main window.

In method 3, the method may further include: receiving an instruction for ending the fourth application, and redisplaying, in the main window, the application displayed in the main window.

Specifically, the fourth application is an application actively displayed from the background, and is an application different from the first application and the second application. The application actively displayed from the background such as an incoming voice call in a call application or an incoming video call or voice call in a communication application is actively displayed on the screen of the electronic device. In this application, when the fourth application display instruction sent from the background is received, the fourth application may be displayed in the main window, or may be displayed in the secondary window, and split screen does not exit. When displaying of the fourth application ends, the application previously displayed in the main window is redisplayed in the main window, so that the user continues to use the split screen, and user experience is therefore improved.

According to the screen display method provided in this embodiment, after receiving the multi-window instruction, in response to the multi-window instruction, the electronic device displays the first window and the second window, and displays the first prompt and the status indication of the first prompt in the first window, and the second prompt and the status indication of the second prompt in the second window. An interface of the first application is displayed in the first window, and an interface of the second application is displayed in the second window. The first prompt and the second prompt are in the active state or the inactive state. A window with a prompt in the active state is a main window, and a window with a prompt in the inactive state is a secondary window. Finally, the electronic device stores the application displayed in the main window, and the application displayed in the main window is the first application or the second application. In this way, the electronic device knows an application displayed in the main window and an application displayed in the secondary window, so that a resource that can be used by only one application process at a time can be fixedly allocated to an application displayed in one window in the multi-window display. This prevents applications in a plurality of screen windows from contending for a resource, and improves user experience. In addition, an application actively displayed from the background may be displayed in the main window or the secondary window, and the multi-window (for example, split screen) does not exit, so that the user continues to use the multi-window, and user experience is therefore improved.

The following uses three specific embodiments to describe in detail the three methods in the technical solution of the method embodiment shown in FIG. 3.

### Embodiment 1

The critical resource is a resource that can be used by only one application process at a time, for example, an audio resource or a printer. In this embodiment, the audio resource is used as an example to describe allocation of the critical resource in the split screen scenario. An audio resource cannot be simultaneously used by two or more applications in a system of the electronic device. For example, music simultaneously played by two music apps cannot be listened to in the system. In an existing Android system, if two music applications are simultaneously opened, a first opened music application stops playing music, and then a later opened music application continues to play music. To be specific, the Android system considers by default that the last application obtains audio resource use permission, and other applications needs to release the audio resource use permission. The method is confusing, and sometimes interrupts use by the user, and brings poor user experience. In this embodiment of this application, the main window and the secondary window are distinguished in the multi-window display, and the window manager (that is, a window manager service) stores the application displayed in the main window, and provides an external query interface. When receiving an application of an application for the audio resource use permission, an audio resource manager (AudioManager) queries whether the application is the application displayed in the main window. If yes, the audio resource use permission is allocated to the application. If no, the audio resource use permission is not allocated to the application, or a fake audio resource use permission may be allocated to the application. When the application obtains the fake audio resource use permission, the application outputs a handle based on virtual audio. The critical resource use permission is allocated to the application displayed in the main window. This can prevent applications in a plurality of screen windows from contending for a resource. For example, once the user plays music in the main window by using a music app, no matter whether the user watches a video or plays a game in the secondary window, the application in the secondary window does not occupy the audio resource. This prevents applications in a plurality of screen windows from contending for the audio resource. The user can joyfully listen to music in the main window while watching a video in the secondary window based on subtitles.

### Embodiment 2

After the split screen display, the user operates the electronic device, for example, operates a navigation button, an external keyboard, a Bluetooth keyboard, or a volume button of the electronic device or inputs voice. These are all instructions input by the user to the electronic device. This also means that the instructions input by the user to the electronic device are also critical resources. In this embodiment of this application, the main window and the secondary window are distinguished in the multi-window display, and it is set that all instructions input by the user to the electronic device are distributed to the main window and only a touch screen instruction is received by the secondary window.

To be specific, in the Android system, a transfer process of an instruction input to the electronic device may be roughly divided into three parts: inputting to the system, processing by a window manager, and processing by a view (View). The window manager serves as a manager of windows, or cooperates with an input manager service (Input Manager Service) to transfer an input instruction to an appropriate application or window for processing. In this embodiment, because the main window and the secondary window are distinguished in the multi-window display, it can be set that all instructions input by the user to the electronic device are distributed to the main window, and the main window performs corresponding processing on the main window based on the instructions. The secondary window receives only a touch screen instruction, and performs corresponding processing based on the touch screen instruction. Therefore, in the split screen scenario, the instruction for operating the electronic device by the user may be prevented from being switched back and forth between different split screen windows.

### Embodiment 3

In this embodiment, because the main window and the secondary window are distinguished in the multi-window display, when the fourth application display instruction sent from the background is received, the fourth application may be displayed in the main window, or may be displayed in the secondary window, and split screen does not exit. When displaying of the fourth application ends, the application previously displayed in the main window is redisplayed in the main window, so that the user continues to use split screen, and user experience is therefore improved. For example, before a call interface is displayed, an Android window manager service queries, on the window manager, which current window is the main window, and determines a display position of the call interface based on a query result.

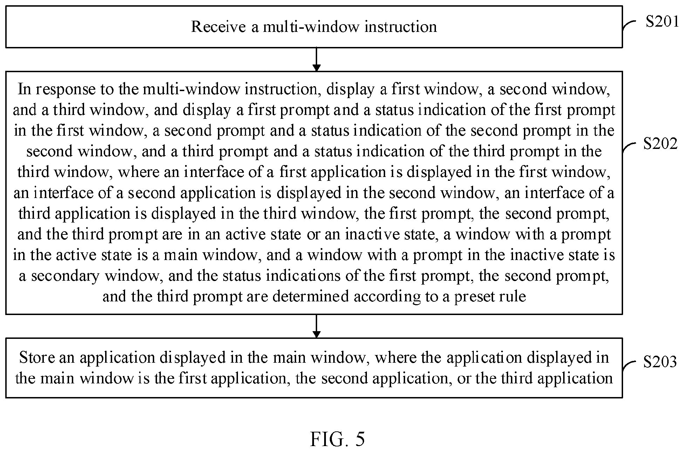

It should be noted that, in the foregoing embodiment, an example in which two windows are displayed in the multi-window display scenario is used. There may be more than two windows. When there are more than two windows, similarly, a prompt is displayed while an application is displayed in each window, and only one prompt is in an active state. To be specific, only one window is the main window, and other windows are secondary windows. In a critical resource allocation scenario, critical resource use permission may be allocated to the main window, all instructions input by the user to the electronic device may also be distributed to the main window, the application sent from the background may also be displayed in the main window, and multi-window display does not exit. A detailed process is similar to a solution of two windows, and is described below with reference to FIG. 5.

FIG. 5 is a flowchart of an embodiment of a screen display method according to this application. As shown in FIG. 5, the method in this embodiment is performed by an electronic device that has a touchscreen. After receiving a multi-window instruction, the electronic device may display two windows on a screen, or may display more than two windows. In this embodiment, displaying three windows is used as an example, and the method in this embodiment may include the following steps.

S201: Receive the multi-window instruction.

S202: In response to the multi-window instruction, display a first window, a second window, and a third window, and display a first prompt and a status indication of the first prompt in the first window, a second prompt and a status indication of the second prompt in the second window, and a third prompt and a status indication of the third prompt in the third window. An interface of a first application is displayed in the first window, an interface of a second application is displayed in the second window, and an interface of a third application is displayed in the third window. The first prompt, the second prompt, and the third prompt are in an active state or an inactive state. A window with a prompt in the active state is a main window, and a window with a prompt in the inactive state is a secondary window. The status indications of the first prompt, the second prompt, and the third prompt are determined according to a preset rule.

In a possible implementation, the preset rule may be: determining a sequence of opening the first application, the second application, and the third application; and determining a window corresponding to a first opened application as a main window, and windows corresponding to other applications as secondary windows; or determining a window corresponding to a later opened application as a main window, and windows corresponding to other applications as secondary windows.

In a possible implementation, the preset rule may be: In horizontal split screen display, a window that is initially set to be a leftmost or rightmost window on a screen is a main window, and other windows are secondary windows. Alternatively, another method may be used.

In a possible implementation, a user may operate a prompt (for example, clicking the prompt) of a window, to change a state of the prompt, and switch the window to a main window or a secondary window. In this case, the method in this embodiment may further include the following steps:
S204: Receive an operation on the first prompt, the second prompt, or the third prompt.
S205: In response to the operation on the first prompt, the second prompt, or the third prompt, change a state of the first prompt, the second prompt, or the third prompt.

Further, when the operation on the first prompt is not received within a preset time period, the first prompt is not displayed; when the operation on the second prompt is not received within a preset time period, the second prompt is not displayed; and when the operation on the third prompt is not received within a preset time period, the third prompt is not displayed. For example, the preset time period is 5s, and the prompts automatically disappear after the preset time period, to avoid affecting normal use by the user.

Further, after the prompts disappear, if the user needs to readjust the main and secondary windows, the prompts automatically pop up. In this case, the method in this embodiment may further include the following steps:
S206: Receive an operation on the touchscreen.
S207: In response to the operation on the touchscreen, redisplay the first prompt in the first interface, the second prompt in the second interface, and the third prompt in the third interface.

For example, when the user adjusts a division line of the screen, the prompts on the three interfaces automatically pop up simultaneously.

It should be noted that the first prompt in the first interface, the second prompt in the second interface, and the third prompt in the third interface disappear or are displayed simultaneously.

S203: Store an application displayed in the main window. The application displayed in the main window is the first application, the second application, or the third application.

Specifically, after the user determines the main and secondary windows, a window manager in the electronic device may store the application displayed in the main window, so that the electronic device knows the application displayed in the main window and an application displayed in the secondary window. A resource that can be used by only one application process at a time may be fixedly allocated to an application displayed in one window in multi-window display, and the window may be a main window or a secondary window. This prevents applications in a plurality of screen windows from contending for a resource, and improves user experience. In addition, an application actively displayed from the background (for example, a voice call in a call application, or a video call or a voice call in a communication application) may be displayed in the main window or the secondary window, and multi-window (for example, split screen) does not exit, so that the user continues to use the multi-window, and user experience is therefore improved. For a specific process, refer to descriptions of method 1, method 2, and method 3 in the embodiment shown in FIG. 3. Details are not described herein again.

This application further provides a readable storage medium. The readable storage medium stores executable instructions. When at least one processor of an electronic device executes the executable instructions, the electronic device performs the screen display method in the foregoing method embodiment.

This application further provides a program product. The program product includes executable instructions, and the executable instructions are stored in a readable storage medium. At least one processor of an electronic device may read the executable instructions from the readable storage medium, and the at least one processor executes the executable instructions, to enable the electronic device to implement the screen display method in the foregoing method embodiment.

This application further provides a chip. The chip is connected to a memory, or the chip is integrated with a memory. When a software program stored in the memory is executed, the screen display method in the foregoing method embodiment is implemented.

A person of ordinary skill in the art may understand that all or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, DVD), a semiconductor medium (for example, a solid-state drive Solid State Disk (SSD)), or the like.

## Claims

1. A screen display method, wherein the method is performed by an electronic device that has a touchscreen, and the method comprises:
receiving a multi-window instruction;
in response to the multi-window instruction, displaying a first window and a second window, and displaying a first prompt and a status indication of the first prompt in the first window, and a second prompt and a status indication of the second prompt in the second window, wherein an interface of a first application is displayed in the first window, an interface of a second application is displayed in the second window, the first prompt and the second prompt are in an active state or an inactive state, a window with a prompt in the active state is a main window, a window with a prompt in the inactive state is a secondary window, and the status indication of the first prompt and the status indication of the second prompt are determined according to a preset rule; and
storing an application displayed in the main window, wherein the application displayed in the main window is the first application or the second application.

2. The method according to claim 1, wherein the method further comprises:
receiving an operation on the first prompt or the second prompt; and
in response to the operation on the first prompt or the second prompt, changing a state of the first prompt or the second prompt.

3. The method according to claim 1 or 2, wherein the method further comprises:
when the operation on the first prompt is not received within a preset time period, skipping displaying the first prompt; and
when the operation on the second prompt is not received within a preset time period, skipping displaying the second prompt.

4. The method according to claim 3, wherein the method further comprises:
receiving an operation on the touchscreen; and
in response to the operation on the touchscreen, redisplaying the first prompt in the first interface and the second prompt in the second interface.

5. The method according to any one of claims 1 to 4, wherein the preset rule is:
determining a sequence of opening the first application and the second application; and determining a window corresponding to a first opened application as a main window, and a window corresponding to a later opened application as a secondary window; or
determining a window corresponding to a later opened application as a main window, and a window corresponding to a first opened application as a secondary window.

6. The method according to any one of claims 1 to 5, wherein the method further comprises:
receiving an application of a third application for obtaining critical resource use permission, wherein the third application is the first application or the second application; and
if the third application is the stored application displayed in the main window, allocating the critical resource use permission to the third application.

7. The method according to any one of claims 1 to 5, wherein the method further comprises:
receiving an instruction input by a user to the electronic device; and
performing corresponding processing on the main window based on the instruction input by the user to the electronic device.

8. The method according to claim 7, wherein the instruction input by the user to the electronic device comprises an instruction used by the user to operate the electronic device and a voice input instruction.

9. The method according to any one of claims 1 to 5, wherein the method further comprises:
receiving an instruction for displaying a fourth application sent from the background; and
displaying the fourth application in the main window.

10. The method according to claim 9, wherein the method further comprises:
receiving an instruction for ending the fourth application; and
redisplaying, in the main window, the application displayed in the main window.

11. An electronic device, comprising: a processor, a memory, and a touchscreen, wherein the memory and the touchscreen are coupled to the processor, the memory is configured to store computer program code, the computer program code comprises computer instructions, and when the processor reads the computer instructions from the memory, the electronic device is enabled to perform the following operations:
receiving a multi-window instruction;
in response to the multi-window instruction, displaying a first window and a second window, and displaying a first prompt and a status indication of the first prompt in the first window, and a second prompt and a status indication of the second prompt in the second window, wherein an interface of a first application is displayed in the first window, an interface of a second application is displayed in the second window, the first prompt and the second prompt are in an active state or an inactive state, a window with a prompt in the active state is a main window, a window with a prompt in the inactive state is a secondary window, and the status indication of the first prompt and the status indication of the second prompt are determined according to a preset rule; and
recording an application displayed in the main window, wherein the application displayed in the main window is the first application or the second application.

12. The electronic device according to claim 11, wherein the processor is further configured to:
receive an operation on the first prompt or the second prompt; and
in response to the operation on the first prompt or the second prompt, change a state of the first prompt or the second prompt.

13. The electronic device according to claim 11 or 12, wherein the processor is further configured to:
when the operation on the first prompt is not received within a preset time period, skip displaying the first prompt; and
when the operation on the second prompt is not received within a preset time period, skip displaying the second prompt.

14. The electronic device according to claim 13, wherein the processor is further configured to:
receive an operation on the touchscreen; and
in response to the operation on the touchscreen, redisplay the first prompt in the first interface and the second prompt in the second interface.

15. The electronic device according to any one of claims 11 to 14, wherein the preset rule is:
determining a sequence of opening the first application and the second application; and determining a window corresponding to a first opened application as a main window, and a window corresponding to a later opened application a secondary window; or
determining a window corresponding to a later opened application as a main window, and a window corresponding to a first opened application as a secondary window.

16. The electronic device according to any one of claims 11 to 15, wherein the processor is further configured to:
receive an application of a third application for obtaining critical resource use permission, wherein the third application is the first application or the second application; and
if the third application is the stored application displayed in the main window, allocate the critical resource use permission to the third application.

17. The electronic device according to any one of claims 11 to 15, wherein the processor is further configured to:
receive an instruction input by a user to the electronic device; and
perform corresponding processing on the main window based on the instruction input by the user to the electronic device.

18. The electronic device according to claim 17, wherein the instruction input by the user to the electronic device comprises an instruction used by the user to operate the electronic device and a voice input instruction.

19. The electronic device according to any one of claims 11 to 15, wherein the processor is further configured to:
receive an instruction for displaying a fourth application sent from the background; and
display the fourth application in the main window.

20. The electronic device according to claim 19, wherein the processor is further configured to:
receive an instruction for ending the fourth application; and
redisplay, in the main window, the application displayed in the main window.

21. A readable storage medium, wherein the readable storage medium stores executable instructions, and when at least one processor of an electronic device executes the executable instructions, the electronic device performs the screen display method according to any one of claims 1 to 10.

22. A program product, wherein the program product comprises a computer program, the computer program is stored in a readable storage medium, at least one processor of a communications apparatus can read the computer program from the readable storage medium, and the at least one processor executes the computer program, so that the communications apparatus implements the method according to any one of claims 1 to 10.
